# FASCICULE DE BREVET EUROPEEN

(11) **EP 0 663 172 B1**
(45) Date de publication et mention de la délivrance du brevet: **18.08.1999**
(21) Numéro de dépôt: 95400048.5
(22) Date de dépôt: 10.01.1995
(51) Int. Cl.: A47J 31/06

(54) **Appareil pour préparer une boisson par passage d'un liquide à travers un produit**
Vorrichtung für eine Getränkezubereitung, bei der eine Flüssigkeit durch ein Substrat strömt
Beverage maker passing liquid through a substrate

(30) Priorité: 12.01.1994 FR 9400288
(43) Date de publication de la demande: 19.07.1995
(73) Titulaire: SEB S.A., 69130 Ecully (FR)
(72) Inventeur: Bonneville, Jean-François, F-69400 Limas (FR); Bosc, Alain, F-69230 St Genis-Laval (FR)
(74) Mandataire: Harlé, Robert

(56) Documents cités:
- EP-A- 0 097 129
- EP-A- 0 496 688
- FR-A- 2 577 405
- NL-A- 6 709 182

## Description

La présente invention concerne un appareil pour préparer une boisson par passage d'un liquide à travers un produit, notamment une machine à café électrique pour café express, dans laquelle un liquide sous pression, typiquement de l'eau, permet d'extraire les substances aromatiques solubles d'un produit tel qu'une mouture de café.

Ces appareils comportent de manière connue un récipient de traitement qui comprend un filtre formant fond sur lequel est retenu le produit.

Ce récipient de traitement est monté de manière amovible par des moyens de fixation sur un embout, sous des moyens d'arrivée du liquide.

Comme il est bien connu, le récipient de traitement est rempli à chaque opération d'un produit tel que du café, puis fixé à l'embout de l'appareil. Après passage du liquide à travers le produit et obtention de la boisson, le récipient de traitement est démonté de l'embout pour l'éviction du produit et le lavage éventuel du filtre et du récipient de traitement.

Dans les appareils de l'art antérieur, le récipient de traitement comporte des excroissances radiales qui viennent en prise avec une rainure ménagée près du bord inférieur de l'embout.

Dans ces structures connues, la distance séparant le filtre formant fond et les moyens d'arrivée du liquide est toujours inchangée lorsque le récipient de traitement est monté en position de fonctionnement sur l'embout de l'appareil.

Cette distance est prévue pour permettre à la quantité maximale de produit admissible dans le récipient d'être introduite dans celui-ci et d'être comprise entre les moyens d'arrivée du liquide et le filtre formant fond. Aussi, en fonction de la quantité de produit présent dans le récipient de traitement, la distance séparant le produit des moyens d'arrivée du liquide est variable.

Or, lorsque les moyens d'arrivée du liquide ne sont pas en contact avec le produit, une quantité supérieure de liquide peut être présente en même temps dans le récipient de traitement, ce qui nuit à la qualité de la boisson obtenue, notamment lorsqu'il s'agit de café express, dans la mesure où il est important qu'une bonne compression mécanique de la mouture de café soit exercée par les moyens d'arrivée d'eau, celle-ci influençant la pression d'extraction des substances solubles de la mouture.

De plus, après utilisation, le produit retenu par le filtre est plus humide, et est moins facilement éjectable du récipient de traitement.

On connaît également des appareils dans lesquels le filtre est interchangeable en fonction de la dose de produit utilisé et de la quantité de boisson que l'on désire obtenir. Le changement de filtre est fastidieux et ne permet l'utilisation que de doses constantes prédéterminées de produit.

De plus, lorsqu'un filtre adapté à créer de la mousse dans la boisson obtenue, tel que décrit dans le brevet FR-2 676 658 au nom de la demanderesse, est utilisé, son fonctionnement et la création de mousse sont fortement dépendants de la pression à laquelle le liquide est introduit dans le produit.

Or, la présence d'un espace entre les moyens d'arrivée du liquide et le produit est nuisible au maintien de la pression adéquate.

Un autre exemple de l'art antérieur est décrit dans le document FR-2.577.405. Celui-ci concerne une machine à café raccordée directement sur un réseau d'eau potable. Cette machine comprend un ensemble porte-filtre ayant des ergots. Ces ergots ont une face supérieure et une face inférieure et prennent appui sur des rampes hélicoïdales de deux sortes différentes permettant de faire monter ou descendre, par rotation, l'ensemble porte-filtre. Selon que le porte-filtre est monté ou descendu, les ergots prennent appui sur les unes ou sur les autres des deux sortes de rampes hélicoïdales. Cette machine peut donc fonctionner avec une quantité de mouture, variable, comprise dans une certaine plage.

Dans cette machine connue, le blocage de l'ensemble porte-filtre est obtenu par le seul coincement ou serrage des ergots sur les rampes hélicoïdales. Aucune sécurité contre les effets d'un geste malencontreux de dévissage n'est prévue.

En raison de son mode d'alimentation en eau, la pression de fonctionnement est nécessairement limitée. Ainsi, une telle machine ne peut pas travailler avec une pression exerçant sur la mouture une force de poussée importante.

Dans le document NL-6.709.182 est décrite une machine à café utilisant des doses de café, spécifiques, calibrées et conditionnées à l'avance. La qualité de la boisson obtenue peut être variable, selon trois modes de fonctionnement correspondant chacun à un taux de compression exercé sur la dose. Dans cette machine, la même quantité de produit est donc toujours utilisée.

La présente invention permet de remédier aux inconvénients précités de la technique antérieure et propose notamment un appareil pour préparer une boisson dont la qualité n'est pas dépendante de la quantité de boisson que l'utilisateur souhaite obtenir.

Un autre but de l'invention est de disposer d'une machine permettant de réaliser une boisson à partir d'une quantité de produit pouvant être variable.

Un autre but encore de l'invention est aussi de disposer d'une machine apte à fonctionner à une pression relativement élevée sans occasionner de de réglage.

Un but de l'invention est encore de disposer d'une machine comportant un récipient destiné à contenir le produit, dit récipient de traitement, pouvant être bloqué, en position de fonctionnement.

Ceci est atteint par appareil tel que défini à la revendication 1.

Les revendications 2-11 définissent des mode particuliers d'exécution.

L'appareil, pour préparer une boisson par passage d'un liquide à travers un produit, comporte un récipient de traitement, comprenant un filtre formant fond sur lequel est retenu le produit, et un embout sur lequel est monté de manière amovible par des moyens de fixation le récipient de traitement sous des moyens d'arrivée du liquide, des moyens de fixation comprenant des moyens formant rampe solidaires de l'embout et des moyens complémentaires solidaires du récipient de traitement et adaptés à se déplacer sur lesdits moyens formant rampe lorsque le récipient de traitement pivote autour d'un axe central de l'embout, la longueur et l'angle d'inclinaison des moyens formant rampe étant adaptés à déplacer le récipient de traitement par rapport à l'embout entre une position d'introduction et une position maximale dans laquelle les moyens d'arrivée du liquide sont à une distance prédéterminée faible du filtre. Les moyens complémentaires solidaires du récipient de traitement forment rampe complémentaire, et des moyens de blocage sont adaptés à maintenir le récipient de traitement et l'embout l'un par rapport à l'autre dans une position de fonctionnement, située entre la position d'introduction et ladite position maximale, dans laquelle les moyens d'arrivée du liquide sont en contact avec le produit.

Grâce aux moyens formant rampe équipant l'embout et le récipient de traitement, on peut ajuster la distance séparant les moyens d'arrivée d'eau et le produit introduit dans le récipient de traitement.

Ainsi, quelle que soit la dose de produit placé dans le récipient de traitement, celui-ci peut être positionné sur l'embout de l'appareil de manière que les moyens d'arrivée d'eau soient en contact avec le produit.

Lorsque le liquide arrive sous pression, il est distribué de manière régulière dans le produit, à une pression sensiblement constante qui permet notamment le bon fonctionnement d'un filtre destiné à créer de la mousse.

De plus, on évite également de détremper le produit contenu dans le récipient de traitement, ce qui améliore la qualité de la boisson obtenue par extraction des arômes solubles du produit, et facilite le retrait du produit après utilisation.

Les moyens de blocage permettent d'éviter qu'en fonctionnement, le récipient de traitement ne se démonte de l'embout de l'appareil, notamment sous l'effet de la force de pression créée par le liquide sur le produit, à cause de la réversibilité des moyens formant rampe.

D'autres particularités et avantages de l'invention apparaîtront encore dans la description ci-après.

Aux dessins annexés, donnés à titre d'exemples non limitatifs:
La Figure 1 est une vue en élévation d'un appareil conforme à l'invention.
La Figure 2 est une vue en perspective d'une poignée d'un appareil conforme à l'invention.
La Figure 3 est une vue en coupe de la poignée de la Figure 2.
La Figure 4 est une vue en projection sur un plan d'un embout d'un appareil conforme à l'invention selon un premier mode de réalisation.
La Figure 5 est une vue analogue à la Figure 4 selon un deuxième mode de réalisation de l'invention.

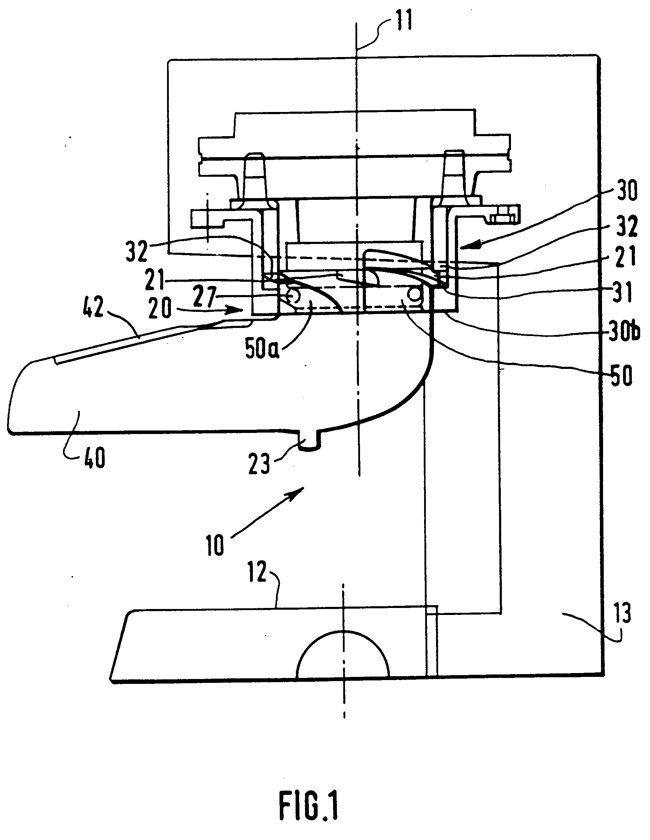

En référence tout d'abord à la Figure 1, on va décrire un appareil 10 pour préparer une boisson par passage d'un liquide à travers un produit.

L'appareil 10 est par exemple une machine à café express, le produit utilisé étant une mouture de café traversée par de l'eau chaude sous pression.

L'appareil 10 comprend de manière classique une poignée constituée d'un manche 40 solidaire d'un récipient de traitement 20.

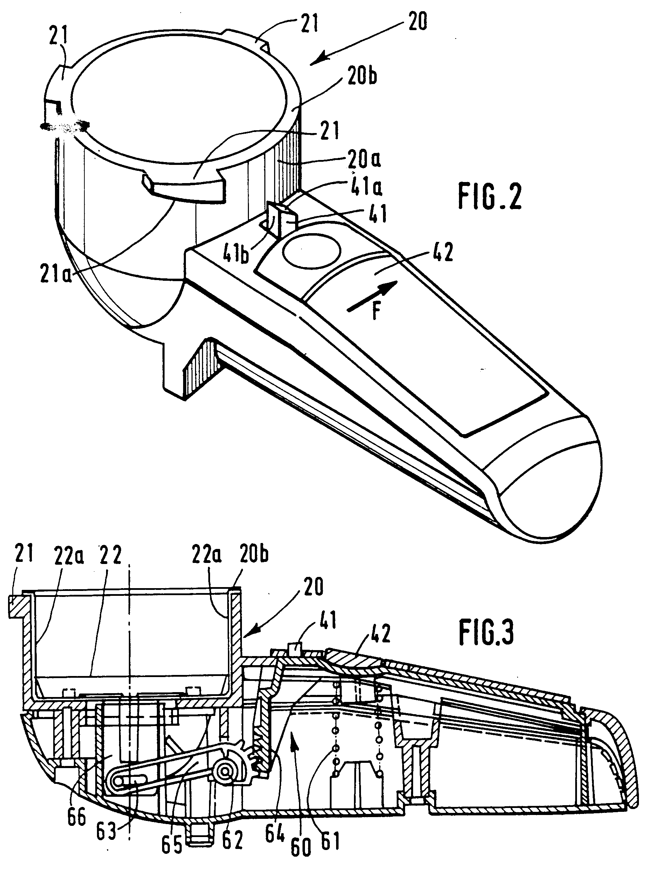

Comme mieux représenté à la Figure 3, le récipient de traitement 20 est adapté à recevoir un filtre 22 formant fond sur lequel est retenu le produit.

Le filtre 22 comporte généralement des parois pleines 22a de sorte que le produit est maintenu dans la cavité formée par le filtre 22 et les parois 22a.

L'appareil 10 illustré à la Figure 1 comprend en outre un embout 30 sur lequel est monté, de manière amovible par des moyens de fixation 21, 31, le récipient de traitement 20, sous des moyens d'arrivée 50 du liquide.

Il comprend en outre généralement un socle 12 sur lequel peut être posé un récipient, tel qu'une tasse, destiné à recueillir la boisson s'écoulant par une ou plusieurs ouvertures 23 du récipient de traitement 20.

Une chaudière 13 est prévue pour chauffer le liquide à une température donnée et le conduire sous pression jusqu'au récipient de traitement par le biais des moyens d'arrivée du liquide 50.

Selon l'invention, les moyens de fixation comprennent des moyens formant rampe 31, solidaires de l'embout 30, et des moyens formant rampe complémentaire 21, solidaires du récipient de traitement 20 et adaptés à se déplacer sur les moyens formant rampe 31 lorsque le récipient de traitement 20 pivote autour d'un axe central 11 de l'embout 30.

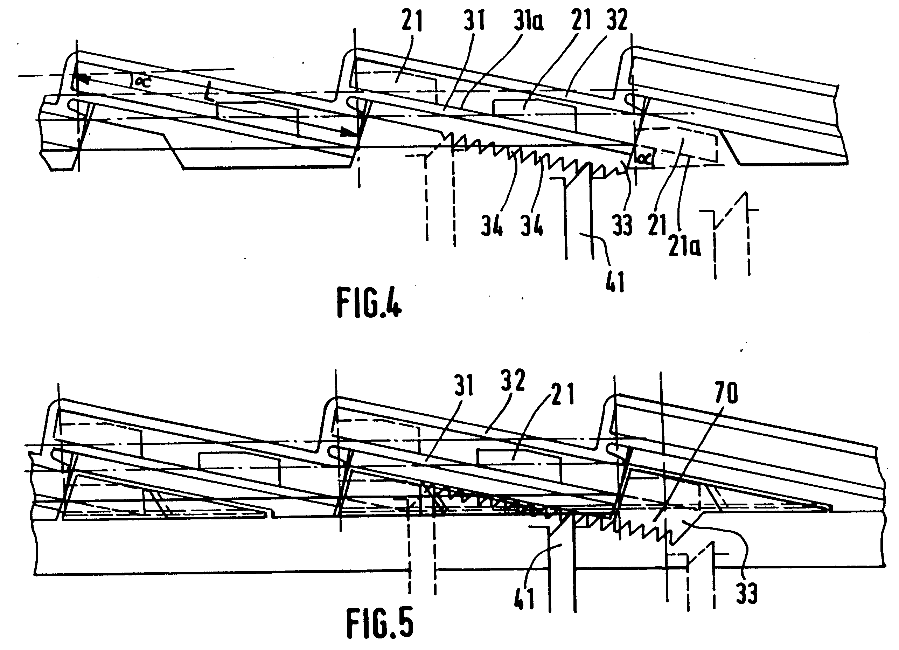

Ainsi, comme représenté par exemple à la Figure 4, l'embout et le récipient de traitement se déplacent l'un par rapport à l'autre lorsque les moyens formant rampe complémentaire 21 se déplacent sur les moyens formant rampe 31. La longueur L et l'angle d'inclinaison α des moyens formant rampe 31 sont adaptés à déplacer le récipient de traitement 20 par rapport à l'embout 30 entre une position d'introduction, représentée en pointillés à la droite de la Figure 4, et une position maximale, représentée en pointillés à la gauche de la Figure 4, dans laquelle les moyens d'arrivée du liquide 50 sont à une distance prédéterminée faible du filtre 22.

Cette distance prédéterminée est fixée en fonction de la quantité minimale de boisson que l'on souhaite pouvoir préparer avec l'appareil 10.

Elle peut être sensiblement nulle; dans ce cas les moyens d'arrivée du liquide 50 sont sensiblement adjacents au filtre 22 dans la position maximale, et n'importe quelle quantité de produit peut être utilisée. Elle peut également être non nulle, définissant ainsi un volume minimal, compris entre le filtre 22 et les moyens d'arrivée de liquide 50, qui doit toujours être rempli de produit lors des utilisations de l'appareil 10.

Les moyens formant rampe 31 forment un patin sur lequel peuvent glisser les moyens formant rampe complémentaire 21. L'angle d'inclinaison est compris entre 10 et 15° et est égal de préférence à 12°. L'angle de rotation du récipient de traitement 20 entre la position d'introduction et la position maximale, autour de l'axe 11 de l'embout 30, est compris entre 90° et 180°, et est égal de préférence à 120°.

Il est prévu des moyens de blocage adaptés à maintenir le récipient de traitement 20 et l'embout 30 l'un par rapport à l'autre dans une position de fonctionnement située entre la position d'introduction et la position maximale.

Une position de fonctionnement est représentée en trait plein à la Figure 4, dans laquelle les moyens formant rampe complémentaire 21 sont situés sensiblement au milieu des moyens formant rampe 31 de l'embout 30.

Les moyens de blocage comprennent une crémaillère 33, s'étendant sensiblement parallèlement aux moyens formant rampe 31, et un téton 41 adapté à se loger dans des dents 34 de la crémaillère 33.

Dans l'exemple de la Figure 4, la crémaillère 33 est fixée à l'embout 30, sur une portion de son bord inférieur.

Elle s'étend sur une longueur suffisante pour permettre la fixation du récipient de traitement jusque dans la position maximale.

Dans une autre version de l'invention, illustrée à la Figure 5, la crémaillère 33 peut être fixée à un enjoliveur 70 qui entoure et protège l'embout 30, à l'extérieur de celui-ci.

Le téton 41 est solidaire de la poignée de l'appareil, comme illustré à la Figure 2. Il a une forme adaptée aux dents 34 de la crémaillère, possédant un pan incliné 41a sur sa face avant relativement au sens F de rotation du récipient de traitement lors de sa fixation sur l'embout, et une face arrière 41b verticale.

Ces moyens de blocage 33, 41 permettent ainsi de bloquer le récipient de traitement 20 dans la position de fonctionnement, même si une force de poussée importante est exercée par le liquide sur le produit ou si un geste malencontreux est appliqué sur le manche 40 de la poignée de l'appareil 10.

Des moyens formant joint 27, adaptés à réaliser l'étanchéité entre le produit retenu dans le filtre 22 et les moyens d'arrivée du liquide 50, sont montés à proximité de l'extrémité inférieure 50a des moyens d'arrivée du liquide 50. Ces moyens formant joint sont de préférence un joint torique 27 entourant l'extrémité inférieure 50a. Ce joint vient en contact avec la paroi 22a du filtre 20, à tout niveau de sa hauteur, ce qui permet de garantir l'étanchéité quelle que soit la position de fonctionnement et la quantité de produit introduit dans le filtre 22.

Des moyens formant contre-rampe 32 sont en outre solidaires de l'embout 30 et s'étendent sensiblement parallèlement aux moyens formant rampe 31, les moyens formant rampe complémentaire 21 étant adaptés à coulisser entre les moyens formant rampe 31 et les moyens formant contre-rampe 32. Ces dernières permettent de faciliter le retrait du récipient de traitement de l'embout.

Comme illustré à la Figure 2, le récipient de traitement 20, comprend des saillies externes 21 sur sa surface extérieure 20a, à proximité de son bord supérieur 20b, lesdites saillies externes ayant une face inférieure 21a inclinée par rapport à un plan horizontal.

De même, l'embout 30 comporte des saillies internes 31, sur sa surface intérieure à proximité de son bord inférieur 30b, les saillies internes 31 ayant une face supérieure 31a inclinée par rapport à un plan horizontal d'un angle d'inclinaison α égal à l'angle d'inclinaison α de la face inférieure 21a des saillies externes 21 du récipient de traitement 20.

L'étanchéité entre le récipient de traitement 20 et l'embout 30 est réalisée au niveau du contact de la surface extérieure 20a du récipient de traitement 20 et des saillies internes 31 de l'embout 30.

Les saillies externes 21 et les saillies internes 31 sont réparties régulièrement respectivement autour du bord supérieur 20b circulaire du récipient de traitement 20 et du bord inférieur circulaire 30b de l'embout 30.

Le nombre de saillies externes 21 du récipient de traitement 30 est égal au nombre de saillies internes 31 de l'embout 30.

Dans l'exemple illustré, le nombre est égal à trois.

Ainsi, chaque saillie externe 21 se déplace sur une saillie interne 31 de l'embout 30, sous une contre-rampe 32 formée également d'une portion en saillie 32 sur la paroi interne de l'embout 30.

De préférence, une crémaillère 33 unique est prévue et s'étend sous une des saillies internes 31 de l'embout 30.

En référence à la Figure 3, le récipient de traitement 20 est solidaire d'un manche 40 comportant des moyens de commande manuelle 42 adaptés à commander un dispositif de propulsion 60 du filtre 22 vers le bord supérieur 20b du récipient de traitement 20.

Le dispositif de propulsion comprend de manière connue une roue dentée 62 qui peut être entraînée en rotation par une crémaillère 64 solidaire d'un bouton poussoir 42.

La roue dentée 62 entraîne en rotation un arbre 65 qui est fixé à un support 66 du filtre 22 de manière à déplacer ce support 66 autour de l'axe de rotation de la roue dentée 62 et de propulser ainsi le filtre 22 vers le bord supérieur 20b du récipient de traitement.

Ce dispositif de propulsion 60 permet de retirer aisément le produit après utilisation.

Un ressort de rappel 61 permet de ramener le bouton poussoir 42 en position initiale et de replacer ainsi le filtre 22 dans le récipient de traitement 20.

Selon l'invention, le téton 41 des moyens de blocage est solidaire des moyens de commande manuelle 42 qui sont actionnables entre une position au repos et une position d'éjection dans laquelle le filtre 22 est propulsé, des moyens de commande manuelle 42 étant actionnables en outre entre la position de repos et une position de déverrouillage dans laquelle le téton 41 est dégagé des dents de la crémaillère 33.

Les moyens de commande manuelle 42 comprennent un bouton poussoir 42 actionnable entre la position de repos et le position d'éjection, la position de déverrouillage étant une position intermédiaire située entre la position de repos et la position d'éjection du bouton poussoir 42.

Pour ménager cette position intermédiaire de déverrouillage des moyens de blocage 41, 33, l'arbre 65 du dispositif de propulsion 60 est monté en pivotement sur le support 66 du filtre 22.

Une cale 63, solidaire du support 66 est immobile par rapport à celui-ci, permet de bloquer la rotation de l'arbre au-delà d'un certain angle.

Ainsi, en fonctionnement, lorsque l'utilisateur exerce une petite poussée sur le bouton 42, suffisante pour dégager la face arrière 41b du téton 41 des dents 34 de la crémaillère 33, la roue dentée 62 et l'arbre 65 sont pivotés d'un angle de rotation inférieur ou égal à l'angle au-delà duquel la rotation de l'arbre 65 est bloquée par la cale 63 solidaire du support 66.

Par contre, après retrait de la poignée de l'embout 30, on peut propulser le filtre 22 pour retirer le produit utilisé, tel que du marc de café, en exerçant une poussée suffisante sur le bouton 42, de manière à provoquer une rotation de l'arbre 65 jusqu'à sa position de blocage par la cale 63, puis le déplacement du support 66 et du filtre 22, grâce au pivotement de l'arbre 65 autour de l'axe de la roue dentée 62.

Ainsi, des moyens de commande unique 42 permettent à la fois de déverrouiller les moyens de blocage 41, 33 et de propulser le filtre 22.

Bien entendu, l'invention n'est pas limitée à l'exemple décrit ci-dessus et de nombreux modifications peuvent être apportées à celui-ci sans sortir du cadre de l'invention.

## Revendications

1. Appareil pour préparer une boisson par passage d'un liquide à travers un produit, comportant un récipient de traitement (20), comprenant un filtre (22) formant fond sur lequel est retenu le produit, et un embout (30) sur lequel est monté de manière amovible par des moyens de fixation (21, 31) le récipient de traitement (20) sous des moyens d'arrivée (50) du liquide, les moyens de fixation (21, 31) comprenant des moyens formant rampe (31) solidaires de l'embout (30) et des moyens complémentaires (21) solidaires du récipient de traitement (20) et adaptés à se déplacer sur lesdits moyens formant rampe (31) lorsque le récipient de traitement (20) pivote autour d'un axe central (11) de l'embout (30), la longueur (L) et l'angle d'inclinaison (α) des moyens formant rampe (31) étant adaptés à déplacer le récipient de traitement (20) par rapport à l'embout (30) entre une position d'introduction et une position maximale dans laquelle les moyens d'arrivée du liquide (50) sont à une distance prédéterminée faible du filtre (22), caractérisé en ce que les moyens complémentaires (21) solidaires du récipient de traitement (20) sont constitues par une rampe complémentaire aux moyens formant rampe (31) solidaire de l'embout (30), et en ces l'appareil comporte des moyens de blocage (33, 41) comprenant une crémaillère (33) et un téton (41) adapté à se loger dans des dents (34) de la crémaillère (33), les moyens de blocage étant adaptés à maintenir le récipient de traitement (20) et l'embout (30) l'un par rapport à l'autre dans une position de fonctionnement située entre ladite position d'introduction et ladite position maximale, dans laquelle les moyens d'arrivée du liquide sont en contact avec le produit.

2. Appareil conforme à la revendication 1, caractérisé en ce que des moyens formant joint (27), adaptés à réaliser l'étanchéité entre le produit retenu dans le filtre (22) et les moyens d'arrivée du liquide (50), sont montés à proximité de l'extrémité inférieure des moyens d'arrivée du liquide (50).

3. Appareil conforme à la revendication 1, caractérisé en ce que la crémaillère (33), s'étend sensiblement parallèlement aux moyens formant rampe (31), (33).

4. Appareil conforme à l'une des revendications 1 à 3, caractérisé en ce que des moyens formant contre-rampe (32) sont solidaires de l'embout (30) et s'étendent sensiblement parallèlement aux moyens formant rampe (31), lesdits moyens formant rampe complémentaire (21) étant adaptés à coulisser entre les moyens formant rampe (31) et les moyens formant contre-rampe (32).

5. Appareil conforme à l'une des revendications 1 à 4, caractérisé en ce que le récipient de traitement (20) comprend des saillies externes (21) sur sa surface extérieure (20a), à proximité de son bord supérieur (20b), lesdites saillies externes (21) ayant une face intérieure (21a) inclinée par rapport à un plan horizontal, et en ce que l'embout (30) comporte des saillies internes (31), sur sa surface intérieure à proximité de son bord inférieur (30b), lesdites saillies internes (31) ayant une face supérieure (31a) inclinée par rapport à un plan horizontal d'un angle d'inclinaison (α) égal à l'angle d'inclinaison (α) de la face inférieure (21a) des saillies externes (21) du récipient de traitement (20).

6. Appareil conforme à la revendication 5, caractérisé en ce que lesdites saillies externes (21) et lesdites saillies internes (31) sont réparties régulièrement respectivement autour du bord supérieur (20b) du récipient de traitement (20) et du bord inférieur (30b) de l'embout (30).

7. Appareil conforme à l'une des revendications 5 ou 6, caractérisé en ce que le nombre de saillies externes (21) du récipient de traitement (30) est égal au nombre de saillies internes (31) de l'embout (30).

8. Appareil conforme à l'une des revendications 1 à 7, caractérisé en ce que le récipient de traitement (20) est solidaire d'un manche (40) comportant des moyens de commande manuelle (42) adaptés à commander un dispositif de propulsion (60) du filtre (22) vers le bord supérieur (20b) du récipient de traitement (20).

9. Appareil conforme aux revendications 3 et 8, caractérisé en ce que le téton (41) des moyens de blocage est solidaire des moyens de commande manuelle (42) qui sont actionnables entre une position de repos et une position d'éjection dans laquelle le filtre (22) est propulsé, des moyens de commande manuelle (42) étant actionnables en outre, entre la position de repos et une position de déverrouillage dans laquelle le téton (41) est dégagé des dents (34) de la crémaillère (33).

10. Appareil conforme à la revendication 9, caractérisé en ce que les moyens de commande manuelle (42) comprennent un bouton poussoir (42) actionnable entre la position de repos et la position d'éjection, la position de déverrouillage étant une position intermédiaire située entre la position de repos et la position d'éjection du bouton poussoir (42).

11. Appareil conforme à l'une des revendications 1 à 10, caractérisé en ce que ledit appareil (10) est une machine à café express.

## Claims

1. A beverage maker passing liquid through a substrate, comprising a treatment vessel (20), consisting of a filter (22) forming a bottom on which the substrate is retained, and an extension piece (30) supporting the vessel treatment (20), held in place by removable fastening means (21, 31), under liquid inlet means (50), whereas the fastening means (21, 31) comprise means forming a ramp (31) integral with the extension piece (30), and complementary means (21) integral with the treatment vessel (20) and provided to move over the said means forming a ramp (31) when the treatment vessel (20) pivots around a central axle (11) of the extension piece (30), whereas the length (L) and the tilting angle (α) of the means forming a ramp (31) are provided to move the treatment vessel (20) in relation to the extension piece (30) between an introduction position and a maximum position in which the liquid inlet means (50) are at a preset small distance from the filter (22); characterised in that the complementary means (21) integral with the treatment vessel (20) consist of a complementary ramp with means forming a ramp (31) integral with the extension piece (30) and in that the beverage maker comprises locking means (33, 41) comprising a rack (33) and a stub (41) capable of engaging into teeth (34) of the rack (33), whereby the locking means are provided to hold the treatment vessel (20) and the extension piece (30) with respect to one another in an operating position located between the said introduction position and the said maximum position, in which the liquid inlet means are in contact with the substrate.

2. A beverage maker according to claim 1, characterised in that means forming a joint (27) capable of providing tightness between the substrate retained in the filter (22) and the liquid inlet means (50), are mounted close to the lower end of the liquid inlet means (50).

3. A beverage maker according to claim 1, characterised in that the rack (33) extends substantially parallel to the means forming a ramp (31).

4. A beverage maker according to one of claims 1 to 3, characterised in that means forming a counter-ramp (32) are integral with the extension piece (30) and extend substantially parallel to the means forming a ramp (31), whereby the said means forming a complementary ramp (21) are provided to slide between the means forming a ramp (31) and the means forming a counter-ramp (32).

5. A beverage maker according to one of claims 1 to 4, characterised in that the treatment vessel (20) comprises external projections (21) on its external surface (20a), close to its upper rim (20b), whereas the said external projections (21) have an internal face (21a) tilted with respect to a horizontal plane and in that the extension piece (30) comprises internal projections (31), on its internal surface close to its lower rim (30b), whereas the said internal projections (31) have an upper face (31a) tilted with respect to a horizontal plane of a tilting angle (α) equal to the tilting angle (α) of the lower face (21a) of the external projections (21) of the treatment vessel (20).

6. A beverage maker according to claim 5, characterised in that the said external projections (21) and the said internal projections (31) are distributed regularly respectively around the upper rim (20b) of the treatment vessel (20) and of the lower rim (30b) of the extension piece (30).

7. A beverage maker according to one of claims 5 or 6, characterised in that the number of external projections (21) of the treatment vessel (30) is equal to the number of internal projections (31) of the extension piece (30).

8. A beverage maker according to one of claims 1 to 7, characterised in that the treatment vessel (20) is integral with a grip (40) comprising manual control means (42) capable of controlling a propulsion device (60) of the filter (22) to the upper rim (20b) of the treatment vessel (20).

9. A beverage maker according to claims 3 and 8, characterised in that the stub (41) of the locking means is integral with manual control means (41) which can be actuated between the home position and an ejection position in which the filter (22) is propelled, whereas manual control means (42) can be actuated moreover, between the home position and an unlocking position in which the stub (41) has cleared the teeth (34) of the rack (33).

10. A beverage maker according to claim 9, characterised in that the manual control means (42) comprise a push-button (42) that can be actuated between the home position and the ejection position, whereas the unlocking position is an intermediate position situated between the home position and the ejection position of the push-button (42).

11. A beverage maker according to one of claims 1 to 10, characterised in that the said maker (10) is an expresso coffee machine.

## Patentansprüche

1. Gerät für die Zubereitung eines Getränkes durch Durchführen einer Flüssigkeit durch ein Produkt, umfassend einen Behandlungsbehälter (20), enthaltend einen Filter (22), der einen Boden bildet, auf dem das Produkt gehalten wird, und einen Ansatz (30), auf dein der Behandlungsbehälter (20) durch Befestigungsmittel (21, 31) abnehmbar unter Mitteln (50) für die Zuführung der Flüssigkeit befestigt ist, wobei die Befestigungsmittel (21, 31) Mittel, die eine Rampe (31) bilden und mit dem Ansatz (30) fest verbunden sind, und komplementäre Mittel (21) umfassen, die mit dem Behandlungsbehälter (20) fest verbunden sind und derart ausgeführt sind, daß sie sich auf den Mitteln, die die Rampe (31) bilden, verschieben, wenn der Behandlungsbehälter (20) um eine Mittelachse (11) des Ansatzes (30) schwenkt, wobei die Länge (L) und der Neigungswinkel (α) der Mittel, die die Rampe (31) bilden, derart ausgeführt sind, daß sie den Behandlungsbehälter (20) in bezug auf den Ansatz (30) zwischen einer Einführposition und einer Maximalposition verschieben, in der sich die Mittel für die Flüssigkeitszuführung (50) in einem vorbestimmten geringen Abstand zu dem Filter (22) befinden, dadurch gekennzeichnet, daß die komplelmentären Mittel (21), die mit dem Behandlungsbehälter (20) fest verbunden sind, durch eine Rampe gebildet sind, die zu den Mitteln, die die mit dem Ansatz (30) fest verbundene Rampe (31) bilden, komplementär ist, und daß das Gerät Feststellmittel (33, 41) umfaßt, die eine Zahnstange (33) und einen Zapfen (41) umfassen, derart ausgeführt, daß er in Zähne (34) der Zahnstange (33) eingreifen kann, wobei die Feststellmittel so ausgeführt sind, daß sie den Behandlungsbehälter (20) und den Ansatz (30) zueinander in einer Betriebsposition halten, die zwischen der Einführposition und der Maximalposition liegt, in der die Mittel für die Zuführung der Flüssigkeit mit dem Produkt in Kontakt sind.

2. Gerät nach Anspruch 1, dadurch gekennzeichnet, daß Mittel, die eine Dichtung (27) bilden und derart ausgeführt sind, daß sie die Dichtigkeit zwischen dem in dem Filter (22) zurückgehaltenen Produkt und den Mitteln für die Zuführung der Flüssigkeit (50) herstellen, in der Nähe des unteren Endes der Mittel für die Zuführung der Flüssigkeit (50) befestigt sind.

3. Gerät nach Anspruch 1, dadurch gekennzeichnet, daß sich die Zahnstange (33) im wesentlichen parallel zu den Mitteln (31), die eine Rampe bilden, erstreckt.

4. Gerät nach einem der Ansprüche 1 bis 3, dadurch gekennzeichnet, daß Mittel, die eine Gegenrampe (32) bilden, mit dem Ansatz (30) fest verbunden sind und sich im wesentlichen parallel zu den Mitteln, die die Rampe (31) bilden, erstrecken, wobei die Mittel, die die komplementäre Rampe (21) bilden, derart ausgeführt sind, daß sie zwischen den Mitteln, die die Rampe (31) bilden, und den Mitteln, die die Gegenrampe (32) bilden, gleiten.

5. Gerät nach einem der Ansprüche 1 bis 4, dadurch gekennzeichnet, daß der Behandlungsbehälter (20) äußere Vorsprünge (21) auf seiner Außenfläche (20a) in der Nähe seines oberen Randes (20b) umfaßt, wobei die äußeren Vorsprünge (21) eine in bezug auf eine Horizontalebene geneigte Innenfläche (21a) aufweisen, und daß der Ansatz (30) innere Vorsprünge (31) auf seiner Innenfläche in der Nähe seines unteren Randes (30b) umfaßt, wobei die inneren Vorsprünge (31) eine obere, in bezug auf eine Horizontalebene um einen Neigungswinkel (α) geneigte Fläche (31a) aufweisen, welcher Winkel gleich dem Neigungswinkel (α) der unteren Fläche (21a) der äußeren Vorsprünge (21) des Behandlungsbehälters (20) ist.

6. Gerät nach Anspruch 5, dadurch gekennzeichnet, daß die äußeren Vorsprünge (21) und die inneren Vorsprünge (31) regelmäßig um den oberen Rand (20b) des Behandlungsbehälters (20) bzw. um den unteren Rand (30b) des Ansatzes (30) verteilt sind.

7. Gerät nach einem der Ansprüche 5 oder 6, dadurch gekennzeichnet, daß die Anzahl der äußeren Vorsprünge (21) des Behandlungsbehälters (30) gleich der Anzahl der inneren Vorsprünge (31) des Ansatzes (30) ist.

8. Gerät nach einem der Ansprüche 1 bis 7, dadurch gekennzeichnet, daß der Behandlungsbehälter (20) mit einem Griff (40) versehen ist, der Mittel zur manuellen Steuerung (42) umfaßt, die derart ausgeführt sind, daß eine Vorrichtung (60) für den Vorschub des Filters (22) zum oberen Rand (20b) des Behandlungsbehälters (20) gesteuert wird.

9. Gerät nach den Ansprüchen 3 und 8, dadurch gekennzeichnet, daß der Zapfen (41) der Feststellmittel mit den manuellen Steuermitteln (42) fest verbunden ist, die zwischen einer Ruheposition und einer Auswerfposition, in welcher der Filter (22) vorgeschoben wird, betätigbar sind, wobei die manuellen Steuermittel (42) ferner zwischen der Ruheposition und einer Entriegelungsposition, in der der Zapfen (41) aus den Zähnen (34) der Zahnstange (33) gelöst ist, betätigbar sind.

10. Gerät nach Anspruch 9, dadurch gekennzeichnet, daß die manuellen Steuermittel (42) einen Druckknopf (42) umfassen, der zwischen der Ruheposition und der Auswerfposition betätigbar ist, wobei die Entriegelungsposition eine Zwischenposition zwischen der Ruheposition und der Auswerfposition des Druckknopfes (42) ist.

11. Gerät nach einem der Ansprüche 1 bis 10, dadurch gekennzeichnet, daß das Gerät (10) eine Espresso-Kaffeemaschine ist.
